(19) Europäisches Patentamt / European Patent Office / Office européen des brevets

(11) **EP 4 300 709 A1**

(12) **EUROPEAN PATENT APPLICATION**

(43) Date of publication:
**03.01.2024 Bulletin 2024/01**

(21) Application number: **23181498.9**

(22) Date of filing: **26.06.2023**

(51) International Patent Classification (IPC):
**H01Q 3/26** (2006.01)      **G01S 7/40** (2006.01)
**H04B 17/309** (2015.01)

(52) Cooperative Patent Classification (CPC):
**H01Q 3/267; G01S 7/024; G01S 7/03;
G01S 7/4017; G01S 7/4026; G01S 7/406;
H04B 17/12; H04B 17/14; H04B 17/221;**
G01S 2013/0254

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **27.06.2022  IL 29432822**

(71) Applicant: **Elta Systems Ltd.**
**Ashdod 7710201 (IL)**

(72) Inventors:
• **SHALOM, Eldad**
  **Gan-Yavne (IL)**
• **TAYOURI, Feri**
  **Ashdod (IL)**
• **RAVEH, Zion**
  **Ashdod (IL)**

(74) Representative: **Patel, Nikesh et al**
**AA Thornton IP LLP**
**8th Floor, 125 Old Broad Street**
**London EC2N 1AR (GB)**

(54) **TECHNIQUE FOR CALIBRATION OF A PHASED ARRAY ANTENNA**

(57)     A computer implemented method for self-calibration of a Phased Array Antenna (PAA) having an array of N antenna elements. Each element operates as a transmit antenna element and/or as a receive antenna element. The method includes building an overdetermined system of linear equations presenting different couples of antenna elements. Each equation expressing a difference between a value of a real parameter, determined for a specific couple, and a sum of unknowns including unknown calibrated parameters of the antenna elements forming the specific couple, Next, solving the system of equations for obtaining a solution in the form of values of corrections to be applied to corresponding antenna elements in the array, in order to reduce the difference in each of the equations by bringing internal parameters of the antenna elements in a specific couple closer to their respective unknown calibrated parameters. Each couple being formed from a transmit antenna element and a receive antenna element positioned at an arbitrary distance from one another in the PAA array.

Fig. 2

EP 4 300 709 A1

**Description**

**Field of the invention**

The present invention relates to calibration of phased array antennas, more specifically by using a Mutual Coupling Method.

**Background of the invention**

A Phased array antenna (PAA) is composed of multiple antenna elements (radiating elements) arranged in certain order and space (array) on a plane or curved surface, as well as signal power distribution/summing network components. If the elements of PAA are distributed on a plane, it is called planar PAA. If they are distributed on a curved surface, the antenna is called curved surface array antenna. A phase shifter is usually set on each antenna element to change the phase relationship between the antenna element signals. The variation of signal amplitude between antenna elements is achieved by unequal power distribution/summing network or an attenuator. Under the control of beam steering computers (which may form part of an antenna system, the phase and amplitude relations between antenna elements can be changed, so as to obtain the antenna aperture illumination function corresponding to the required antenna pattern, and to quickly change the direction and shape of the antenna beam.

Even if one or more of the array elements cannot transmit or receive, or have other faults, the performance of the antenna will not be much degraded due to cooperation of the remaining elements if they are calibrated.

Active phased array antennas work at their peak performance when they are well calibrated. Moreover, to maintain full operability in both the transmit and receive modes, it is important that the phased array elements should be calibrated for the amplitude and phase in both modes.

Initial calibration of the antenna elements is done at the factory, but their sustained high operability and performance necessitates additional calibration from time to time.

It is essential to precisely set the amplitude and phase of each element channel. However, considerable amplitude and phase differences among the channels can occur due to the different RF hardware connected to each element. Also, the phase and amplitude characteristics of most RF devices depend on frequency and temperature and usually drift in time. In order to equalize the phase and amplitude effects of the channels, phased array antennas need to be calibrated periodically.

There are some known calibration methods such as: calibration using an embedded special designed network, calibration using external antennas and calibration using special purposed internal antenna elements. In all these methods a calibration table is generated, for example in an indoor near field range which is used for reference in the on site calibration procedure. This calibration table should be renewed every few years in the indoor near field range. Phased array antennas, which are used for ground-based radars, are extremely large and difficult for transportation, and require huge near field range facilities for the testing/calibration procedures. It is therefore understood that calibration of such antennas on site, without the necessity of an indoor near field range, is very important. Calibration using the mutual coupling method (MCM) addresses this necessity and sometimes enables a cost-effective calibration on site.

MCM assumes that the array elements can operate in both transmit and receive modes. Further, the basic assumption of the conventional MCM method is that the value of a physical parameter called *"mutual coupling"* between adjacent antenna elements is symmetric for all elements in the array. The major deficiency of MCM is its failure in case of faulty elements. Some such methods propose detecting and bypassing the faulty elements, which is quite a complex task which requires a dynamic algorithm to detect such elements (Y. Neidman, R. Shavit, A. Bronshtein "Diganostc of phased arrays with faulty elements using the mutual coupling method" IET Microw. Antennas Propag., 2009, Vil.3, Iss.2. pp.235-241).

In general, modern mutual coupling methods (MCM) still have various disadvantages, for example require: on/off switches for implementing simultaneous transmit and receive for pairs of elements, uniform spacing between elements of the antenna, dummy elements at the periphery for small antenna arrays, smart algorithms for detecting and avoiding faulty elements. (Ilgin Seker "Calibration methods for phased array radars" Proc. Of SPIE Vol. 87140W-1, 2013)

In reality, some assumptions of known MCM methods are too limited and therefore lead to problems or inaccuracies in their implementation. For example, conventional mutual coupling methods suppose considering and analyzing only couples of adjacent elements. Further, in practice, the mutual coupling value is not equal and non-symmetrical for all the elements.

As already mentioned, another limiting assumption of the conventional MCM methods is that all antenna elements of the antenna array can operate both in the transmit mode and in the receive mode (i.e., are all transceivers). Such MCM methods are thus inapplicable to antennas which comprise one group of antenna elements being transmitters only, and another group of receive only antenna elements.

It should also be noted that various methods are known in the art for solving sets of linear equations. For example, a paper of Andrzej Cichocki and Rolf Unbehauen "Neural Networks for Solving Systems of Linear Equations and Related Problems" (IEEE Transactions on Circuits and Systems - 1: Fundamental Theory and Applications, Vol 39No2, February 1992).

There is still a long felt need in such a technique, which would allow fast and effective self-calibration of a PAA and would overcome the above-mentioned disadvantages.

## Object and summary of the invention

It is therefore an object of the present invention to provide a technique for self-calibration of a phased array antenna (PAA), which would overcome the above-mentioned disadvantages by including the self-calibration without using any external equipment, for example without near field range facilities.

It should be noted that a PAA is considered calibrated in case all antenna elements of its array are calibrated, i.e. they exhibit a common/equalized value of a real parameter (for example, amplitude and/or phase, phasor) when the PAA operates at a specific combination of frequency, polarization and uses transmitting power within an accepted range. (Before calibration, specific receive levels may be selected for antenna elements).

To demonstrate the common value of the real parameter, each specific antenna element of the array has to be suitably adjusted (calibrated). When internal parameters of a specific antenna element ensure obtaining such a common value of amplitude and/or phase or phasor- these parameters are considered calibrated parameters of that element.

The first problem is that when the calibration process starts, such calibrated parameters of the antenna elements are unknown.

The second problem is that for calibrating large PAA arrays, a huge number of internal parameters of multiple antenna elements must be adjusted and balanced so as to become their respective calibrated parameters and thus to ensure a common value of the mentioned real parameter over the array.

The Inventors have arrived to the following solutions of the above-mentioned problems.

The object may be achieved by a computer implemented technique for self-calibration of a PAA having an array of N antenna elements, each of them being configured to operate as a transmit antenna element and/or as a receive antenna element; the technique being implemented by a processor and memory circuitry (PCM) and comprising:

- building a set (system) of linear equations respectively presenting various, different couples of antenna elements in the PAA array, each of the equations expressing a difference between a value/a measurement of a real parameter determined for a specific couple, and a sum of unknowns including unknown calibrated parameters of the antenna elements forming the specific couple,

- solving the set of equations (say, mathematically, statistically, by AI methods etc.) for obtaining a solution in the form of values of corrections to be applied to corresponding antenna elements in the array, so as to reduce or compensate the difference in each of the equations by bringing internal parameters of the antenna elements of the specific couple closer to their respective unknown calibrated parameters,

wherein each of said couples being formed from a transmit antenna element and a receive antenna element positioned at an arbitrary distance from one another in the PAA array.

Ideally, when the mentioned difference turns to zero, the value of the real parameter becomes equal to the sum of the unknown calibrated parameters, which means that the internal parameters of the antenna elements of the specific couple are now calibrated. In reality, when the same is achieved in all the equations of the set with a predetermined accuracy (which may be characterized by a predetermined error value $\varepsilon$), the whole array of the antenna will be considered calibrated.

The set of equations which is built in the proposed method is typically an overdetermined one. In mathematics, a system/set of equations is considered overdetermined if it comprises more equations than unknowns.

The method may apply a Mutual Coupling Method (MCM) for building the mentioned equations for the mentioned arbitrary couples. In practice, the mentioned differences in the equations may be evaluated statistically (ways to do it will be discussed as the description proceeds). Further, statistical methods may be used for solving the set of equations. Based on the above, the technique may be implemented as Statistical Self-Calibration of Antenna by utilizing Elements' Mutual Coupling.

It has to be explained, however, that the mutual coupling method (MCM) which the Inventors suggest applying in the proposed technique, is in a new, modified version.

In the proposed modified method, the *couples* of antenna elements are understood as *pairs* which may be formed from *any* two elements of the antenna array (being they adjacent or non-adjacent ones, i.e. arbitrarily spaced from one another), wherein a first element of the couple is a transmit element and a second element of the couple is a receive element. According to the modified approach, in different couples (pairs) of the antenna elements, values of their mutual coupling may be different. However, in two different couples comprising the same two elements but considered as performing transmission in two opposite directions (so-called "opposite couples", which may be formed from two transceivers capable to mutually exchange their functions), the values of mutual coupling will be considered equal. (This allows reducing the number of unknowns in the set of equations if the set is built from the equations representing different couples. Additional sources of reducing the number of unknowns to facilitate solving the set of equations will be explained as the description proceeds.)

The above definition of the proposed technique is considered a basis for an independent method claim as well as an independent claim for a Processor & Memory Circuit PMC configured for implementing the above-defined technique.

Said value of the real parameter will be called a measurement, whether it was measured at a specific couple of antenna elements, determined based on a number of measurements, or obtained from any source in the form of data.

More specifically, in said equations:

- said value of the real parameter is a measurement performed at a specific couple of antenna elements (e.g., measurement of phase and/or amplitude, or phasor which term will be defined below),
- said sum of unknowns including an unknown calibrated receive parameter and an unknown calibrated transmit parameter of the respective receive and transmit antenna elements in said specific couple,
- the correction values being respectively related to said unknowns in said equations (and being applicable for adjusting suitable internal parameters of the corresponding antenna elements in order to cause reduction of said difference and to approach the respective unknown calibrated parameters of the antenna elements).

Actually, the correction values are indicative of said difference in the equations. Adjustment of the antenna elements based on the correction values allows reducing said difference and approaching the calibrated state. The fact of reaching the calibration of the antenna elements may be detected by checking said correction values and stopping the calibration process wherein said correction values (being indicative of said difference) are reduced till at least a predetermined error value $\varepsilon$.

The correction values may be checked by calculating standard deviation (STD) of the obtained correction values and further comparing the calculated STD with the predetermined error value $\varepsilon$.

The physical meaning of reducing the error till $\varepsilon$ is that parameters of the antenna elements have sufficiently approached the respective unknown calibrated parameters thereof.

The method may be performed in one or more iterations.

If the correction values (say, their STD) exceed $\varepsilon$, there may be a next iteration: upon adjusting the corresponding antenna elements and obtaining updated measurements of the real parameter in said couples, updated values of said difference for the respective equations will decrease (correspondingly, updated correction values will also decrease) thereby indicating that internal parameters of the antenna elements gradually approach their unknown calibrated parameters.

In a number of iterations, the updated values of the difference will be minimized and will tend to zero for all the couples (i.e., in all the corresponding equations). As mentioned, the antenna elements may be considered calibrated when the difference values (indicated by the correction values) in all the equations are minimized up to a predetermined error value $\varepsilon$.

Alternatively or in addition, the degree of calibration may be estimated by calculating a difference between the correction values at a previous iteration and the updated correction values at the present iteration of the method.

The set of equations may be solved, for example, by a statistical method, for example by a Least Squares method (LSqr). In this case, the difference between the two last iterations (previous and current) will be calculated statistically by the LSqr and then checked with a predetermined error value $\varepsilon$, to decide whether an additional iteration is needed.

The term *"phasor"* (sometimes written as "amplitude/phase") should be understood as a complex number expressing both the amplitude value and the phase value of the signal measured or supposed to exist at a specific antenna element, wherein said signal is either a received signal or a transmitted signal.

In one specific example, the value of said real parameter is a value of phasor determined at the receive element of a specific couple.

In other examples, such a measurement of the real parameter may be a value of amplitude a value of phase at the receive element of the couple.

For different real parameters, different respective sets of equations may be built and then solved (i.e., separate sets for amplitude and phase).

In the method, the measurement of the mentioned real parameter for each couple corresponding to a specific equation in the set of equations, is performed at one specific combination of frequency F, antenna polarization AP and power P. Specific levels of receiving power may be selected in advance for antenna elements.

Alternatively or in addition, the inventive concept can be defined using the term "vector" for describing components of the system of the equations, as well as for describing the solutions of the system of equations:
A computer-implemented method for self-calibration of a phased array antenna (PAA) having an array of N antenna elements, the method performed by a processor and memory circuitry (PMC) and comprising:

- building an overdetermined system/set of linear equations for different couples of antenna elements, wherein each couple consists of a transmit antenna element and a receive antenna element positioned in the antenna array at an arbitrary distance from one another, and wherein the system of equations expresses relation (more specifically, a difference) between a vector Q of measurements of the real parameter of the couples and a vector Y of unknowns including unknown values of calibrated parameters of the antenna elements in the couples,

- solving the system of equations, thereby obtaining a solution in the form of a vector YC of correction values for adjusting internal parameters of the respective antenna elements.

As mentioned above, the adjustment of internal parameters of antenna elements is supposed to cause reduction of said difference by bringing internal parameters of the antenna elements closer to their corresponding calibrated parameters and thereby achieving the antenna calibration in one or more iterations. The method may further comprise the explicit step of adjusting parameters of the antenna elements using said correction values (e.g., using said vector YC of the correction values). The method may be further repeated to iteratively achieve said calibration. As mentioned above, the method may be stopped when the correction values become equal or smaller than a predetermined error ε.
The measurements of real parameters for respective equations in said equations' system/set may be performed simultaneously at least at the couples formed between a specific transmit element and different receive elements which receive from said transmit element one and the same signal.
For building the system of equations, the method may comprise preliminary determining of said values of real parameters, say by performing measurements of real parameters of the antenna elements, and/or by obtaining data on such measurements. Such measurements may form said vector Q of measurements.
More specifically, the method may comprise the following steps:

- sequentially causing each specific transmit element of the antenna to transmit a signal so as to expose receive elements of the antenna to receiving the transmitted signal, thereby forming different said couples between different receive elements and said specific transmit element,
- selecting all the couples formed between each transmit element of the antenna and the receive elements of the antenna,
- performing said real measurements at receive elements of the selected couples,
- building said linear simultaneous equations for said real measurements respectively, wherein each specific equation expresses relation between the specific real measurement and a number of unknowns including calibrated parameters of the antenna elements forming the specific couple,
- forming said overdetermined system of the linear simultaneous equations from said equations
- solving said system of equations (mathematically or by AI methods),
- obtaining the solution of said system of equations in the form of said correction values for further adjusting the respective antenna elements so as to iteratively affect said real measurements.

In practice, the proposed method is performed per specific combination comprising at least frequency F and antenna polarization AP. Any combination will also comprise a specific transmitting power P of the currently transmitting antenna element. Specific levels of receiving power may be selected in advance for various antenna elements in the antenna.
In other words, per each frequency F at a specific polarization AP, the antenna elements generally designed to operate at a specific transmission power P may be (and should be) calibrated separately by the proposed method.
In the proposed method, said overdetermined system of equations may be presented as

$$A*Y = Q,$$

where:

Q is the vector-column of measurements taken for the different couples,
Y is the vector-column of unknowns, including said unknown calibrated parameters,
A is a binary matrix built/generated for N elements; "A" may indicate presence or absence of specific unknowns in specific equations built for respective specific couples/measurements.

In should be noted that a sparse matrix A may be used in the processing, which will be advantageous both for reducing the calculation time and for effective memory management.

The following example explains in more detail, what are the vectors of the system of equations and what are the vectors of its solution.

Q is the vector of measurements, has size [N*(N-1),1], comprises measurements of *phasor* for each possible couple of antenna elements, taken when the transmit element of the couple transmits a signal and the receive element of the couple receives the signal;

Y is the vector of unknown, calibrated parameters T, R, M presented as $Y^T$= [T, R, M] (transpose) wherein

T is a vector of unknown, *calibrated* transmit phasors for all transmit elements of the possible couples;

R is a vector of unknown, *calibrated* receive phasors for all receive elements of the possible couples;

M is a vector of unknown, *calibrated* medium phasors expressing mutual coupling of all possible couples;

A is the matrix of presence of specific unknowns in specific measurements taken (and corresponding equations built) for all possible couples;

The solution of the system of equations is presented as a corrections vector YC of three correction vectors TC, RC, MC, presented as $YC^T$ = [TC, RC, MC] (transpose), wherein

TC is a vector of correction values of transmit phasor for the mentioned transmit elements,

RC is a vector of correction values of receive phasor for the mentioned receive elements,

MC is a vector of correction values to medium phasor for the receive elements,

Wherein the vectors TC, RC are intended for applying:

- the TC vector to the respective transmit elements so as to correct the measured transmit phasors thereof
- the RC vector to the respective receive elements so as to correct the measured receive phasors thereof,

in order to minimize errors between results of said measurements and the product of A and the unknown, calibrated parameters of the vector Y.

As mentioned, the system of equations may be solved mathematically - for example by statistical methods, graphically, etc. However, the system of equations may be solved using artificial intelligence (AI) methods, for example by a neural network (NN) method.

In a specific version of the above-proposed method, the statistic method may be a method of Least Squares (LSqr), which is suitable for minimizing the absolute value of A*Y - Q. (i.e., for minimizing said difference).

Another example of a statistical method is an SVD method (a standard variation division method). Among other statistical methods, the Lsqr method is by about 100 times faster.

Still more specifically, there is proposed the computer implemented method for self-calibration of a phased array antenna having an array of N elements, by using mutual coupling between said elements, wherein said array of N elements comprising a plurality of elements configured to operate in a receive mode (receive elements) and a group of elements configured to operate in a transmit mode (transmit elements), the method comprises the following steps performed under control/in cooperation with the antenna's computerized system (PMC) (which will be described further below and which comprises at least a computer/controller with memory and an interface for cooperating with a measuring unit and an adjusting unit):

- causing a specific element of said group of transmit elements to transmit a signal having power P comprising a specific frequency F at a specific polarization AP, so as to expose said plurality of the receive elements to receiving the transmitted signal,
- selecting a set of different couples formed between different receive elements of the plurality and said specific transmit element,
- determining said real parameter at each of the selected couples, by measuring the real parameter (e.g., phasor i.e., amplitude/phase) at the receive element of the selected couple at said specific frequency and polarization; (we keep in mind that a specific level of receiving power may be selected in advance for a specific antenna element).
- sequentially causing each of the remaining elements of said group to transmit a signal having power P comprising the specific frequency F at the specific polarization AP, so as to expose said plurality of the receive elements to receiving the transmitted signal, each time selecting a new set of different couples per a new specific transmit element and performing said measurements at the new set,
- building the overdetermined system of equations for said specific combination of power P, frequency F and antenna polarization AP (and optionally, upon selecting specific levels of receiving power to antenna elements), wherein:

said overdetermined system of equations comprises respective equations for all said selected couples of elements in the array;

each equation in the system is built for a specific selected couple of elements of the array when a first element of the couple is a transmit element and a second element of the couple is a receive element;

each said equation expresses the difference between:

○ a value of the real parameter ( for example, phasor) measured at the receive element of the couple, and between

○ three unknown parameters respectively comprising calibrated real parameter's value of the transmit element, calibrated real parameter's value of the receive element and medium real parameter's value expressing the transmit and receive elements' mutual coupling;

- applying said mathematical or AI method for solving the system of equations, thereby
- obtaining the solution of the system of said equations, the solution comprising said vector of corrections,
- adjusting the antenna elements (say, by controlling their modules to change internal parameters of the antenna elements and thus to change real measurements at those antenna elements at the next iteration) by respectively using components of said vector of corrections.

The mentioned N antenna elements of the phase array may initially comprise only regular elements. In this description, the regular elements are understood as elements being non-faulty, having no saturation effects at the maximal working power value of the transmit power during calibration, and having sufficient SNR (signal-to-noise ratio).

Alternatively (and usually) the N elements' array may include some irregular elements. In our description, we consider the number N of antenna elements as comprising at least the regular elements.

The minimal N for performing the proposed technique is 5 ($N \geq 5$)

The method may comprise a step of performing a test (testing) for checking the array elements and determining there-among irregular elements being characterized by at least one quality from the following non-exhaustive list: faulty (out-of-order), saturated, low SNR.

The irregular elements may be excluded from the total number N of the elements at an early, preliminary stage (before building said equations and performing said measurements).

An example of excluding the irregular elements at the preliminary stage is a built-in test (BIT) which performs express check of the antenna elements, detects that some of them are faulty and thus allows excluding the faulty ones from the further measurements and/or from building respective equations.

Other testing methods may determine that some of the elements are saturated, have low SNR, and/or out of order in comparison with data on previous measurements, which is stored in the computer memory.

In practice, the method may comprise reducing complexity of the system of equations (by not building equations for the irregular elements, and/or by removing the already built for them equations) before solving the system of equations.

In general, the method may be formulated as comprising an optional step of reducing complexity of the overdetermined system of equations by removing one or more equations from said system, while still maintaining the system to remain overdetermined.

Said one or more equations to be removed may relate to at least one faulty element selected from a non-exhaustive list comprising: a saturated element, an out-of-order element, an element with SNR lower than a predetermined minimum value.

Practically in the method, the signal transmitted by a transmit element in a specific couple may comprise more than one frequency, wherein the measurements may be performed simultaneously for said more than one frequency, and wherein said system of equations is built and solved per specific frequency (i.e., per specific combination of frequency, polarization, transmitted power and receive power levels per element), for further adjusting the antenna elements at said specific frequency.

It should be noted that the proposed method is especially useful for self-calibrating of PAA antennas having great number N of antenna elements (5 or more: the greater is N, the more accurate and effective is the method).

In one specific (so-called regular) mode of the proposed calibration technique, the transmission routes Tx and the receiving routes Rx (i.e., parameters of the transmit elements and parameters of the receive elements,) are calibrated in parallel, by solving the same system of equations, thus simultaneously obtaining the correction values RC and the TC from the same vector YC for further adjustment of the respective elements.

However, there may be another (combined) mode of calibration, according to which the transmission routes Tx and the receiving routes Rx may be calibrated separately and independently. In other words, calibration of the transmit elements' parameters may be performed separately from calibration of receive elements' parameters, by solving different systems of equations and obtaining different vectors of corrections.

The regular calibration mode may be performed at a required/working transmitting power of the antenna.

Usually, the regular mode is recommended when there is no essential saturation effect in the antenna receiving elements, or the effect takes place at a neglectable number of the receive elements.

However, at relatively high values (for example, few tenth watts per element, up to few hundred watts) of transmitting power of the antenna, when some receive elements reach saturation, the combined calibration mode is especially recommended (though the combined calibration mode may be used in regular cases too).

The combined calibration mode may be performed in two stages:

- at a first stage, the method comprises transmitting the power being lower than the required/working power and performing the calibration only for the receiving (Rx) routes (i.e., only for receive elements in the pairs), by building and solving the system of equations for N elements and using only the obtained RC values for adjusting the receiving parameters of the antenna elements;
- at a second stage, transmitting the required working power and performing calibration of the transmitting routes by solving the system of equations and then using the obtained TC values for adjusting the transmit antenna element ( say, their transmitting parameters).

Moreover, at the above-mentioned second stage, the number of equations may be essentially reduced by removing the measurements (and consequently, the equations) related to "n" irregular receive elements which get saturated at the required working power, (if such "n" elements are detected in advance).

In yet another version, the inventive method may be defined as follows: a computer implemented method for self-calibration of a Phased Array Antenna (PAA) having an array of antenna elements comprising a pool of transceivers wherein each of them being configured to operate as a transmit antenna element or as a receive antenna element; the method being implemented by a processor and memory circuitry (PCM) and comprises applying a Mutual Coupling Method (MCM) modified so as to build linear equations for various couples of the transceivers, each couple being characterized by a mutual coupling value,

wherein one element of each specific couple is a transmit element performing transmission in a direction of another, receive element of the specific couple, and the two elements are spaced from one another at an arbitrary distance,

and wherein in two different couples comprising the same two transceivers while performing transmission in two opposite directions, values of the mutual coupling are considered equal.

According to a further aspect of the invention, there is provided a processor and memory circuitry (PMC), designed for self-calibration of a phased array antenna (PAA) and configured for implementing the above-described method.

It should be emphasized that the proposed PMC allows providing self-calibration of the PAA without any external equipment, such as external antennas or the like.

According to yet an additional aspect of the invention, there is provided a computerized system comprising at least said PMC. In one embodiment of the proposed computerized system (comprising the PMC), it is integrated with and/or embedded in the phased array antenna PAA.

The PMC may be defined as a processor and memory system designed for calibrating a PAA having an array of N antenna elements including a group capable of operating as transmit elements, and a plurality capable of operating as receive elements, the PMC is configured to be operatively connected to and to establish data and control communication with said PAA for performing the following steps:

- building a set of linear equations respectively presenting different couples of the antenna elements, wherein each of the equations expressing a difference between a value of a real parameter, determined for a specific couple, and a sum of unknowns including unknown calibrated parameters of the antenna elements forming the specific couple,

- solving the set of equations for obtaining a solution in the form of values of corrections to be applied to corresponding antenna elements in the array, for adjusting suitable parameters of the corresponding antenna elements in order to approach the respective unknown calibrated parameters thereof and to cause reduction of said difference,

wherein each of said couples being formed from a transmit antenna element and a receive antenna element positioned at an arbitrary distance from one another in the PAA array.

As mentioned, the sum of unknowns may include unknown values of a calibrated receive parameter and a calibrated transmit parameter of the antenna elements in said specific couple.

The inventive PMC may be designed for applying a Mutual Coupling Method (MCM) modified for building the mentioned equations for the mentioned couples of transceivers ( i.e., the antenna elements which are selectively switchable to operate either as a transmitter or as a receiver) with arbitrary spacing between the elements, wherein in "opposite" couples where the elements are the same but the transmission directions thereof are opposite, the mutual coupling value is considered to be the same.

In an alternative embodiment, the inventive processor and memory circuitry (PMC) may be designed as a PMC for calibrating a phased array antenna PAA having an array of antenna elements, the array including a pool of transceivers, each capable of operating as a transmit element or as a receive element, said PMC is configured

to be operatively connected to and to establish data and control communication with said PAA and

to apply a Mutual Coupling Method (MCM) modified so as to build linear equations for various couples of the transceivers, each couple being characterized by a mutual coupling value,

wherein one element of each specific couple is a transmit element performing transmission in a direction of another, receive element of the specific couple, and the two elements are spaced from one another at an arbitrary distance,

and wherein in two different couples comprising the same two transceivers while performing transmission in two opposite directions, values of the mutual coupling are considered equal.

The PMC may comprise at least a computer and an interface assembly for exchanging data and control instructions with the PAA. The interface assembly may cooperate with a measurement unit and/or an adjustment unit. In practice, the measurement unit and the adjustment unit may be distributed between respective control modules of the antenna elements (since a control module of a specific antenna element usually performs measurements and adjustments for the antenna element). The measurement unit may be configured for performing measurements at the antenna's (PAA) elements. The adjustment unit may be configured for correcting the measured parameters of the antenna elements, based on suitable correction values, to achieve the calibrated parameters of those elements. The computer is intended for receiving the measurement results and processing them according to the method, to obtain the correction vector comprising the correction values.

In particular, the PMC may be configured for:

a) building the overdetermined system so that it comprises a vector Q of the measurements of real parameters and a vector Y of the unknowns including the calibrated parameters of said antenna elements,
b) solving the system of equations by using a mathematical method such as a statistical method, or an artificial intelligence AI method, thereby
c) obtaining the solution of the set of equations in the form of a vector YC of said values of corrections for adjusting the antenna elements.

For building the system of equations, the system (the PMC) is supposed to be operative to obtain data on said measurements and/or to perform preliminary measurements of the real parameters of the antenna elements, so as to form said vector of measurements.

The system (the PMC) may further be operative to enable adjusting the suitable parameters of the antenna elements based on said vector of corrections.

The system may be operative to repeat the above-mentioned steps, so as to iteratively reach said calibration, e.g., by repeating the described algorithm from the beginning and gradually adjusting parameters of the antenna elements during a number of iterations.

In practice, the interface assembly of the PMC may be configured to cooperate with the measurement unit and/or said adjustment unit by control and data interaction with control modules of the respective antenna elements, which control modules perform both the measurements and the adjustments.

It should be noted that, in order to form the vector of measurements Q, the proposed technique may comprise preliminarily performing measurements of the real parameters of said antenna elements physically (by a measurement unit) and/or obtaining data on said measurements from a data base (DB). For example, specific measurements may be performed and stored in the DB in advance. Such specific measurements may be current measurements performed during the method for implementing thereof.

However, the DB may store another type of specific measurements, performed as original measurements of the antenna elements. Such original measurements may be made for a new/repaired/calibrated antenna array, in order to further compare them with current measurements of the same respective elements which could technically deteriorate with time.

For example, the PMC may be configured to implement the following functions in cooperation with/under control of the computer/processor:

- causing each of the transmit antenna elements, in turn, to transmit power towards the remaining antenna elements;
- performing measurements of real parameters of the receive antenna elements by the interface assembly (more specifically by the measurement unit) and forwarding data on the measurements to the computer.

The PMC may be further adapted to adjust real parameters of the antenna elements by applying at least some components of the vector of corrections to said antenna elements (via their respective control modules), thereby bringing the real parameters of the elements closer to the respective calibrated parameters (being unknowns in the equations system) up to an error there-between reaches a predetermined acceptable value.

In one specific embodiment, the PMC may be configured to be operatively connected to and to establish data communication with said PAA for performing the following steps:

- sequentially causing each specific transmit element of the antenna to transmit a signal so as to expose receive elements of the antenna to receiving the transmitted signal, thereby forming different said couples between different receive elements and said specific transmit element,
- selecting all the couples formed between each transmit element of the antenna and the receive elements of the antenna,
- performing said real measurements at receive elements of the selected couples,
- building said linear equations for said real measurements respectively, wherein each specific equation expresses relation (difference) between the specific real measurement and a number of unknowns including calibrated parameters of the antenna elements forming the specific couple,
- forming said overdetermined system of the linear equations from said equations
- solving said system of equations mathematically (for example, by a statistical method of Least Squares),
- obtaining the solution of said system of equations in the form of said vector of correction values for further adjusting the respective antenna elements so as to iteratively affect real measurements updated upon adjusting the antenna elements.

It is to be noted that the description, provided with respect to the proposed method, should be considered applicable to the proposed PMC, *mutatis mutandis.*

As mentioned, there is also provided a computerized system for calibrating a phased array antenna PAA, which comprises the above- described PMC.

The computerized system may further comprise the antenna itself (the PAA). The computerized system, when integrated with the PAA, forms a computerized phased array system which may be a communication system, a radar system, a cellular system, etc.

According to a yet another aspect of the invention, there is further provided a computer implemented algorithm (a software product) comprising a computer-readable code to perform the steps of any of the above-described methods.

According to still another aspect, there is provided a non-transitory computer readable storage medium having embedded thereon the mentioned computer-readable code.

The proposed technique is invariant with respect to both frequency and polarization, which come in combination with a specific power. The antenna has just to be separately calibrated per each specific combination of frequency & polarization & transmit power (& optionally, receive power levels selected per element) which may be required for the antenna operation in practice.

The described self-calibration may be performed just before the antenna's planned action at a specific combination of frequency, polarization, transmit power, (and preferably also receive power levels at specific elements).

Still, a few self-calibration sessions for various combinations of frequency polarization & power may be performed in advance, so respective sets of calibrated transmit and receive values for the antenna elements will be obtained. Such sets, per combination of frequency, polarization and transmit/receive powers, may be stored in the computer, and then selectively applied to the antenna elements when a required specific combination becomes actual for the antenna operation.

The invention will be further described in more detail as the description proceeds. Several examples explaining the technique will be given in the detailed description.

**Brief description of the drawings**

The invention will be further described in detail with reference to the following nonlimiting drawings in which:

**Fig. 1** schematically shows the principle of the proposed modified mutual coupling approach for self-calibration of PAAs.

**Fig. 2** is a schematic exemplary block diagram of the PAA computerized system (PMC), comprising at least a computer, a measuring block, an adjusting block - all interacting with one another and with the PAA.

**Fig. 3** is a schematic flow chart of one version of the method according to the present invention

**Fig. 4** is a schematic illustration of one basic example of the technique/method for an array of two antenna elements

**Fig. 5** is a schematic illustration of another version of the proposed method for an exemplary array of 6 elements

**Detailed description of preferred embodiments**

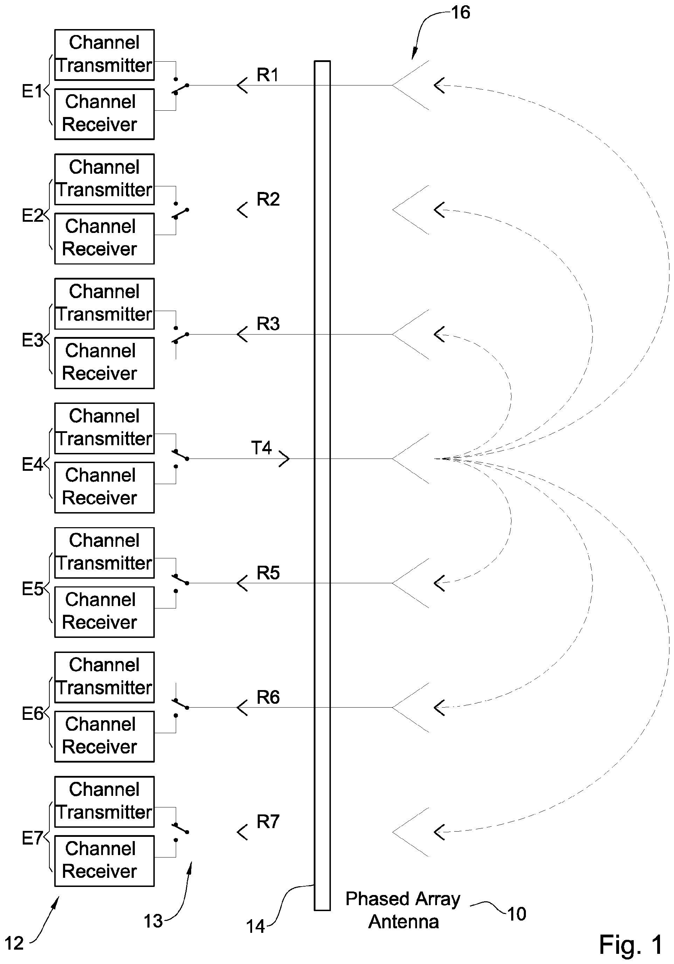

**Fig. 1** shows a simplified scheme of one embodiment of a Phase Array Antenna 10. An array is shown in the form of a row (or column) 12 comprising seven antenna elements E1 - E7. The antenna may also have rows and columns. Usually, an antenna element comprises an antenna body for radiating/receiving an electromagnetic signal, and an antenna module for controlling the radiating/receiving body. In the figure, the control modules are generally shown as switches 13, and the antenna bodies/radiating elements are generally marked 16. Each individual module controls whether the antenna element is presently transmitting or receiving. Also, the control module may perform measurements and adjustments at the antenna element, by using respective means (not shown in the module). For example, the control module may comprise means for measuring phasor of the antenna element at its specific, transmitting or receiving mode. It may also comprise adjustment means, for example at least one attenuator and at least one phase shifter for adjusting one or more parameters of the antenna element. Adjustment of the antenna element may be performed by controlling the attenuator and the phase shifter of the antenna element via its control module, so as to regulate amplitude and phase of the transmit/receive signal. Alternatively, an FPGA or the like can be used for digitally adjusting them.

In this embodiment, each element Ei has an antenna body (radiating element) 16 and a transceiver/a control module (12) switchable between a transmit mode/route Ti and a receive mode/route Ri.

In this exemplary implementation, the antenna elements E1- E7 are all transceivers, they are located under an antenna surface (for example, plate) 14, while their antenna bodies 16 project from the surface 14.

According to the proposed technique and by selecting the modes for the transceivers of the antenna elements E1 - E7, one of the elements may transmit a signal (here, E4 is shown as the transmitting one), and the remaining elements of the antenna array 10 will be subjected to receiving the signal. In this embodiment, all the remaining antenna elements will receive the signal since all of them have the active receive route.

In this specific embodiment, the group of transmit elements is symmetric (or just equal) to a plurality of receive elements, since each element among E1 - E7 is operable both as a receiver and a transmitter, so they are selectively switchable between a transmit mode and a receive mode. However, in a general case of PAA, a group of transmit elements may be non-symmetric to a plurality of receive elements, and that may bring an advantage. For example, the plurality of receive elements may partially overlap with the group of transmit elements. In other words, not all the antenna elements must obligatory be transceivers, some of them may be just receivers.

For the proposed technique, the PAA antenna may comprise a group of elements being just transmitters and a plurality of elements being just receivers. In such an embodiment, a lower number of equations may be built, but the number of unknowns will also be less than for an antenna where all or some of its elements are transceivers.

This is an additional advantage of the proposed method over presently known conventional mutual coupling techniques where all elements of the antenna should both be capable of transmitting and receiving. The proposed technique is thus universal for any existing antennas/radars.

Further, the transmitted signal may comprise one or more frequencies. The antenna array may be characterized by a specific polarization AP. In each session of applying the proposed method, a specific combination of frequency F, antenna polarization AP (and naturally, suitable transmitting power P at each transmitting element) is used, for building a set of equations. Also, specific levels of receiving power may be selected in advance for respective antenna elements. For such a session, the equations may be considered simultaneous.

The proposed technique comprises a modified MCM (mutual coupling method), according to which couples (pairs) of antenna elements may be formed from *any* two elements such that one of them is transmitting and the other is receiving, and wherein these two elements do not have to be adjacent in the array. Further, according to the modified mutual coupling approach, the value of the mutual coupling (for example, value of phasor ) of one couple is considered to be equal to the value of the mutual coupling of an "opposite" couple comprising the same two antenna elements but having opposite functions (in one couple first element is a transmit element and second is a receive element, and in the other, opposite couple the first element is a receive element and the second element is a transmit element). That consideration allows essentially reducing the number of unknowns in the system of equations.

In the illustrated implementation, the proposed technique may comprise a step of forming couples of antenna elements for further processing. It can be done as follows:

- sequentially causing each specific element (currently E4) of the group of transmit elements (E1 to E7) to transmit a signal having a specific power and comprising a specific frequency F at a specific antenna polarization AP, to expose said plurality of the receive elements (E1 to E7 except E4 which is currently transmitting) to receiving the transmitted signal, and thereby to form different couples between different receive elements of the plurality and said specific transmit element (currently E4). Specific levels of receiving power may be selected in advance for respective receive elements of the current transmit element (currently E4).
- such physically formed couples are then identified/selected for performing real measurements at their receive elements and for building respective linear simultaneous equations, wherein each specific equation expresses a relation between the real measurement and a number of unknowns including calibrated parameters of antenna elements forming the specific couple.

It is understood that the above steps suppose sequentially selecting a different element from the group E1- E7 to become the transmitting one, and forming new couples between that next element and the remaining elements of the array.

The method further comprises building and solving a system of equations, wherein each equation is built for a specific couple of antenna elements, formed as described above.

The method and the suitable system will be described in more detail with reference to the next figures.

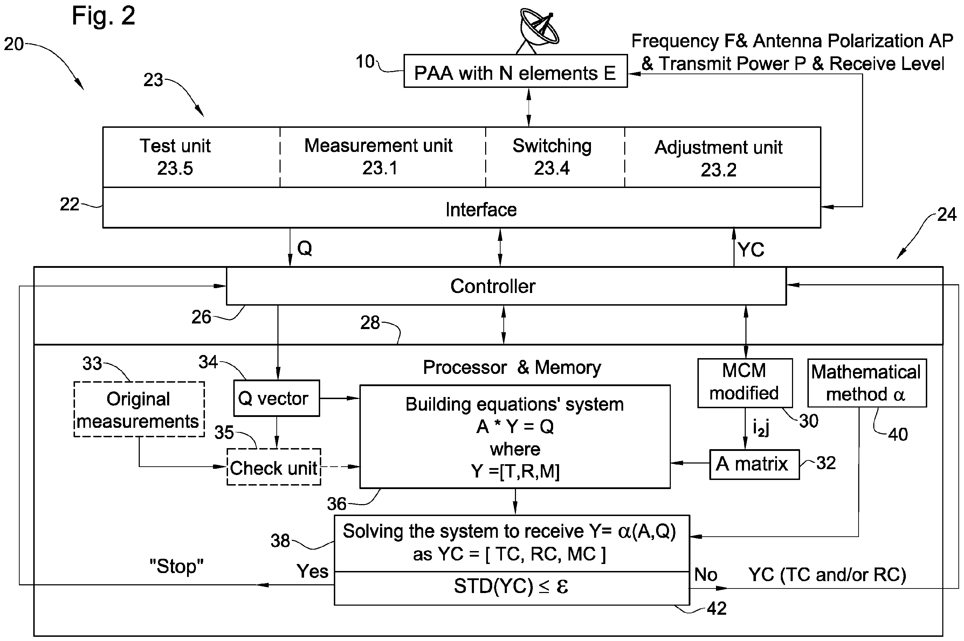

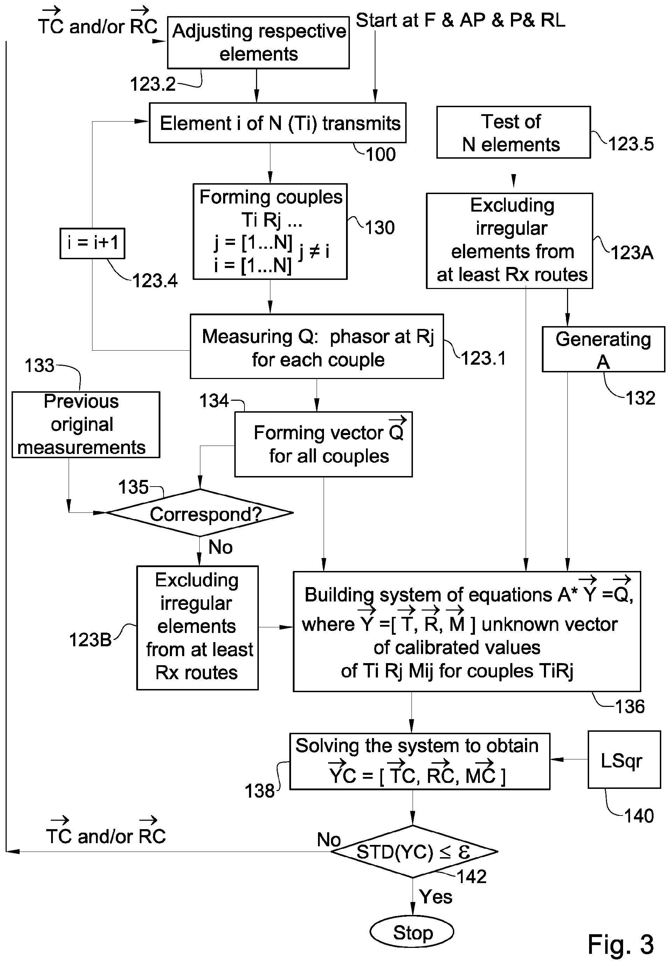

**Fig. 2** presents a schematic exemplary block-diagram of one specific implementation of the proposed computerized system comprising a processor and memory circuit PMC for self-calibration of a phased array antenna PAA 10. It also shows some computer hardware/software blocks in cooperation with one another, for performing various steps of the proposed method. (One exemplary flow chart of the proposed method is shown in the following **Fig. 3**.)

The computerized system 20 (or the phased array system) may be a communication system, a radar system, a cellular system, etc. The PMC forms part of such a computerized system. The PAA antenna itself (10) may also be considered part of the computerized system.

In general, the PMC comprises a computer 24 designed for data and control communication with the antenna via an interface layer. The interface layer is schematically shown as comprising a data interface 22 and an interface assembly 23. The interface assembly 23 may comprise or cooperate with a measurement unit 23.1 for performing measurements at the antenna elements, and/or an adjustment unit 23.2 for correcting the measured parameters of the antenna elements so as to achieve the calibrated parameters. In one specific embodiment, the units 23.1 and 23.3 are respectively formed by the measuring and the adjusting means which are provided in the control modules of the antenna elements. Computer 24 via controller 26 and switching unit 23.4 controls whether a specific antenna element is presently transmitting or receiving. The computer 24 is intended for receiving the measurement results and processing them according to the inventive method, so as to obtain correction values for calibrating the elements. Upon receiving the correction values, adjustment at each specific antenna element may be performed, for example, by phase shifters and amplitude attenuators.

In the figure, the PAA 10 comprising N elements is calibrated by the computerized system 20 comprising a computer 24 and an interface layer 22-23. In one embodiment, the computerized system 20 and the antenna 10 form an integrated structure with embedded firmware. The interface assembly 23 includes at least the measurement unit 23.1 for performing measurements Q on the antenna elements, the adjustment unit 23.2 for adjusting parameters of the antenna elements based on input from the computer 24. The interface assembly 23 allows controllably switching elements of the PAA via the schematically indicated switching unit 23.4 (for example so that a specific antenna element performs transmission while others receive, then another element transmits, etc.) Also, the assembly 23 may comprise an embedded test unit 23.5. It may be a built-in unit BIT for preliminarily checking the antenna elements, for example, by testing whether the electric/electronic circuits of the elements are in order. Other possible test operations may comprise producing electromagnetic waves in advance, to determine whether a specific element is saturated and/or whether it has an insufficient signal-to-noise ratio SNR.

Important: all the mentioned test operations may be performed before the calibration, for example before real measurements.

The data interface 22 a) feeds the computer 24 with results of the measurements Q, b) provides the adjustment unit 23.2 with input on correction values YC computed by the computer 24, and c) exchanges control data with the computer 24.

The computer 24 in general comprises a controller 26 and a processor & memory unit 28 which is provided with software for performing the following functions schematically indicated by the following boxes:

- A modified MCM (Mutual Coupling method) software 30, providing numbers of antenna elements i, j, to the controller 26 and to the matrix A (32) for forming couples of the elements and building a system/set of equations;

- Box 34 forming a Q-vector from the obtained measurements Q,
- Optional boxes 33, 35 for comparing the vector Q with original measurements of the antenna, to detect measurements which may be indicative of saturation and/or low SNR of some specific elements. Box 33 may comprise tables of original measurements stored for all transmitters and all receivers of the antenna array. A line of a specific receive element may show whether its received power was above or below a specific threshold (say 80 percent) of the power to be received. If the checking box 35 detects that according to the Q-vector (box 34), a specific element now receives less power than required by the threshold, the specific element will be considered saturated/non-uniform, block 36 will be informed accordingly and the equations related to the saturated element may be removed from the system of equations). However, the saturation detection may be more complicate; it may involve spectrum analyzing (e.g. fft) or a special saturation detector in the measurement hardware.
- Box 36 for building a system of equations using the Q-vector and the matrix A; the equations comprising a vector Y of unknown calibrated values of transmit, receive and mutual coupling parameters [T, R, M] per couple of antenna elements;
- Box 38 for solving the system of equations by applying a mathematical method using software of box 40. The mathematical method is generally marked as method $\alpha$. In one version, it may be a statistical method of Least Squares (LSqr). A solution of the set of equations is obtained in the form of a vector of corrections YC to unknown calibrated values Y. The vector YC comprises transmit corrections TC, receive corrections RC and mutual coupling corrections MC (MC are not used for further adjustments). The vector YC of corrections may be checked by calculating a standard deviation STD of its correction values TC, RC (see box 42).
- Box 42 estimates whether the correction values TC, RC (e.g. their standard deviation STD) are within some accepted/predetermined error value " $\varepsilon$ ". If STD of vector YC is greater than " $\varepsilon$ ", the correction should be performed by providing the values of TC and/or RC via controller 26 and the interface 22 to the adjustment unit 23.2. After that the process should be repeated, i.e. a next iteration will be initiated by the controller 26. If a new STD (YC) becomes less than or equal to the error value " $\varepsilon$ ", the calibration process may be stopped, and the controller is informed that the antenna has been calibrated for the given frequency F, Antenna Polarization AP and power P (and for selected levels of receiving power at the antenna elements). When the statistical difference STD (YC) becomes equal to or less than $\varepsilon$, the self-calibration of the antenna is considered to be reached.

However, the Tx and Rx routes may be calibrated non-simultaneously. The non-simultaneous calibration may be done in a regular regime. Still, there may be a specific reason for doing that, for example the reason to consider saturation effects and/or low SNR responses in specific, so-called irregular elements. The saturation may be detected by a preliminary testing (see block 23.5), or may be revealed later, when the measurements have already started. To do that, the optional check unit 35 may utilize previous/original measurements stored in the file 33 to detect whether any of the measurements Q is suspicious to saturation and/or insufficient SNR. It is to be kept in mind that saturation may take place in receive antenna elements when a transmit element transmits the power which approaches to maximal allowed working/operating values.

**Fig. 3** shows one exemplary flow chart of the proposed method. Blocks of the flow chart, which have similar functionality with boxes of the block-diagram in Fig. 2, are indicated by respectively similar reference numerals.

The method is performed per specific selected combination of frequency F, antenna polarization AP and power P. As mentioned above, the selected combination may be fulfilled by selecting a specific receive level RL (a level of receiving power for each specific antenna element). Different elements or different groups of elements may have different selected levels of the receiving power. This can be done, for example, by regulating attenuators at the block 23.2 before starting the calibration.

In practice, the method may comprise the following sequence of steps:

- performing measurements for couples formed out of the N elements of the antenna, (see measurement unit 23.1 of the computerized antenna system and block 123.1 of the flow chart), obtaining results Q of the measurements and forwarding Q to a computer of the system,
- storing results Q of the measurements in the form of a vector Q (unit 34 and block 134),
- analyzing the measurement results in the computer by building said system of equations and solving it in order to determine said correction values and thereby to find calibrated phasors for all said N elements (units 36, 138 and blocks 136, 138),

- performing iterative self-calibration of the antenna by applying said correction values to the respective antenna elements, thereby adjusting said elements (unit 23.2 and block 123.2), and repeating the steps from the measurements up to a moment when errors between the vector Q and the product vector Y*A become smaller than predetermined threshold value $\varepsilon$ ( unit 42 and block 142).

The unit 42 and block 142 check the corrections vector YC, for example by calculating a standard deviation STD of its correction values, as shown and described with reference to unit 42 above. Other statistic measures may be used to check the corrections vector YC, for example - calculation of the average value.

For providing the measurements of the vector Q, the following steps may preliminarily be performed:

a) causing a specific element in the antenna to transmit a signal and subjecting all remaining elements of the array to receive the signal (block 100);

b) measuring phasor at the elements receiving said signal (Block 122.1);

c) repeating steps a, b, for all the remaining elements in sequence, by selecting each time another element as a transmitting element (blocks 100, 130, 123.1,123.4);

d) forming the measurement vector Q (block 134) from the measurements performed at steps a) to c).

If the obtained correction values YC are higher than the predetermined respective error values " $\varepsilon$ ", (unit 42, block 142) the following steps may be taken:

f) performing an iteration by applying the obtained correction values RC and/or TC respectively to the antenna elements so as to adjust their characteristics (unit 23.2 and block 123.2) and affect future measurements,
g) performing new measurements (blocks 100, 130, 123.1), forming a new system of equations and solving it (for example, statistically or by AI methods - blocks 136, 138),

repeating the steps f) to g) up to a stage where the newly obtained correction values satisfy the respective predetermined " $\varepsilon$ " thresholds, thereby considering that the elements of the antenna are calibrated (block 142). Alternatively, or in addition, when a statistical method of Least Squares is used (block 14), a slightly different error $\varepsilon1$ (a difference between correction values of adjacent iterations) may be calculated for the whole set of equations. Therefore, when such a statistically calculated error becomes equal or lower than the acceptable value of error $\varepsilon1$, the antenna will be considered calibrated.

In more detail, block 136 builds an overdetermined system of simultaneous linear equations, based on the measurements Q vector received from block 134 and taking into account information on irregular (faulty, saturated or low SNR) elements, received from blocks 123A and 123B.

In this example, the set of linear overdetermined equations is A*Y = Q, where:

Q is the vector of measurements having size [N*(N-1),1], comprising said measurements of phasor for possible couples of the array (block 130), taken when each element of the group, configured for transmitting, sequentially transmits a signal (block 100) and all the remaining elements are subjected to receipt of the signal;
Y is the vector of unknown, calibrated parameters T, R, M presented as Y= [T, R, M], wherein
T is a vector of unknown, calibrated transmit phasors for all transmitting elements of the group;
R is a vector of unknown, calibrated receive phasors for all receiving elements of the array of N elements;
M is a vector of unknown, calibrated medium phasors for all receiving elements;
A is the binary matrix (generated by block 132) of presence of specific unknowns in different equations corresponding to specific different measurements taken for the respective couples of the antenna elements;
wherein the solution of said system of equations (block 138) is presented as a vector YC of said correction values

$$YC = [TC, RC, MC],$$

wherein

TC is a vector of correction values of transmit phasor for said transmit elements of said group,
RC is a vector of correction values of receive phasor for said receive elements of said plurality,
MC is a vector of correction values to medium phasor for all receive elements,

said vectors TC, RC being intended for applying as follows:

- the TC vector to the respective transmit elements, to correct the measured transmit phasors thereof,
- the RC vector to the respective receive elements, to correct the measured receive phasors thereof,

so as to minimize errors (i.e., the difference values) between results of said measurements and the product of A and the unknown, calibrated parameters of the vector Y.

It should be noted that the MC vector is obtained automatically in the solution of the set of equations, but it is not used for adjustment of the antenna elements.

More specifically, the vector Q (Block 134) comprises the measurements taken for any possible transmit-receive couple "Ti,Rj", at the receive element "Rj" of the couple. These measurements are further used as vector Q for building a set of equations in box 136.

The vector Y comprises, per each said couple " Ti, Rj":

an unknown (calibrated) transmit value of phasor of a first element Ti of the specific couple, at its transmitting mode, and
an unknown (calibrated) receive value of phasor of a second element Rj of the specific couple, at its receiving mode, an unknown medium parameter Mij of phasor ( being an unknown mutual coupling value) between a specific pair of said elements.

In cases when saturation is revealed - either before performing the measurements Q (block 123.5) or after that (blocks 133, 135) - the self-calibration may be performed separately for receive routes and transmit routes of the antenna, as follows:

- a) in case when one or more receive elements "n" are detected as irregular (say, saturated and/or having insufficient SNR), reducing the transmit power of the transmit elements as needed for obtaining a desired SNR at said elements "n" (that operation is not shown explicitly in the flow chart of Fig. 3),

In cases when saturation is revealed - either before performing the measurements Q (block 123.5) or after that (blocks 133, 135) - the self-calibration may be performed separately for receive routes and transmit routes of the antenna, as follows:

- b) calibrating receive routes in the antenna at the reduced transmit power, independently from transmit routes in the antenna as follows:

    ◦ for forming said couples, using all receive elements of the array, building and solving the complete system of equations, obtaining a receive correction vector RC from the solution YC and adjusting the elements participating in those couples;

- c) calibrating transmit routes in the antenna independently from receive routes, by transmitting a specific working power from the transmit elements one by one, using only initially unsaturated elements (e.g., N-n having the desired SNR at the specific transmit power) as receive elements for forming said couples (block 123A, 123B), building and solving a reduced system of linear equations, obtaining a transmit correction vector TC from the solution YC and adjusting the transmit elements (e.g. phasor, amplitude and/or phase of the transmit elements by applying said TC there-to, see Block 123.2).

After any reduction, (including the reduction due to any irregular elements and/or the reduction due to saturation for separately calibrating the Tx routes) the number of equations should remain more than the number of unknowns. The number of unknowns Nu has the size of vector Y (R, T, M), which is $\{2*N + [N*(N-1)/2]\}$, while the number of equations has the size of Q, i.e. $[N*(N-1)]$.

In other words, $Nu \le N*(N-1)$, where N designates either the initial number of antenna elements or the reduced number (not including irregular elements).

In the case of conventional calibration $\{Nt=Nr=N \rightarrow Nm=N*(N-1)/2\}$, where

Nt is the number of transmit unknowns (of vector T),
Nr is the number of receive unknowns, (of vector R)
Nm is the number of unknowns of mutual coupling (of vector M).

In the case of separate Tx calibration:
Nt and Nr are different,

$$Nm=Nt*Nr-Nt*(Nt+1)/2$$

$$Nu=Nt+Nr+Nm$$

In this case of separate Tx calibration (in which the saturated elements are not used) the number of equations may still be approximately 2 times more than the number of unknowns in considerably large array antennas (for which the number N of equations = (Q vector) is always =2*Nm, since Nt = Nr).

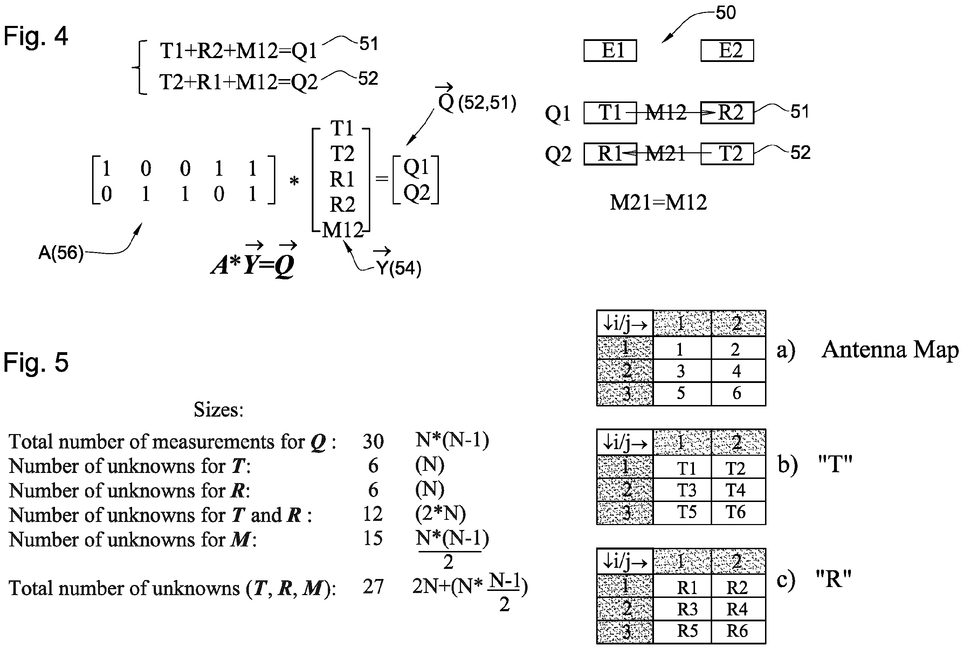

**Fig. 4** schematically illustrates a basic concept of building a system 50 comprising all possible linear equations built for two antenna elements E1, E2, according to the proposed technique. For the sake of simplicity, we suppose that the phase array antenna has an array where N=2.

The system 50 comprises a vector of measurements Q, a vector of unknowns Y and a matrix A of coefficients:

$$A * Y = Q$$

In this basic embodiment, the two elements E1, E2 are transceivers i.e., each of them may be switched from its transmit mode to its receive mode and back. Two linear equations are built based on two respective measurements Q1, Q2 of phasor, taken for two different couples of the mentioned antenna elements.

Q1, Q2 (or 51, 52) respectively indicate the two measurements and the two equations.

T1, T2 respectively indicate the two transmit elements (i.e., E1 and E2 when in transmitting mode) and the phasor values at these respective transmit elements.

R1, R2 respectively indicate the two receive elements (i.e., E1 and E2 when in receiving mode) and the phasor values at these respective receive elements.

In the two measurements/equations 51, 52, the two elements E1 and E2 respectively serve as follows:

- In equation 51, as a first couple comprising a transmit element T1 and a receive element R2, where values of transmit phasor T1 and receive phasor R2 are unknowns. In equation 51, there is also an unknown M12 of medium (mutual coupling) between E1, E2;
- In equation 52, as a second couple comprising a receive element R1 and a transmit element T2, where values of receive phasor R1 and transmit phasor T2 are unknowns. The equation 52 also comprises a medium (mutual coupling) unknown M21, which is considered equal to M12.

The vector Y 54 (vector of unknowns) comprises five unknowns T1, T2, R1, R2, and M12 (which is equal to M21 as mentioned above).

The matrix A (56) binarily indicates by its rows, which of the unknowns participate in the respective equations Q1, Q2.

Please note that Fig.4 just presents the simplest illustrative example, where the system 50 for two elements E1, E2 is not an overdetermined one and cannot be solved. Indeed, the number of equations (2) in the system is less than the number of unknowns (5).

**Fig. 5** presents a kind of inventory for another example, where the phase array antenna comprises an array of six antenna elements (N=6). All of them are transceivers, i.e., each may be switched from the transmit mode to the receive mode and back.

The antenna map is presented by three sub-maps a), b), c).

a) shows an array of antenna elements (marked by numbers 1-6), which are arranged in three rows and two columns,
b) shows the array where transmit parameters of the six elements are shown and marked as T1- T6. It should be noted that during the proposed calibration technique, a single antenna element may operate in the transmit mode (say, T1) at a time, while other elements are in the receive mode. The elements T2-T6 will then operate in their transmit mode one by one, according to the present technique.
c) shows the array where receive parameters of the six elements are shown and marked as R1- R6. However, during the proposed calibration technique, while a single antenna element operates in the transmit mode (say, E1 as T1), other elements of the array are in the receive mode (E2 to E6, as R2 to R6). When another antenna element (say, E2) becomes a transmitter T2, the elements E1 and E3 to E6 will operate in their receive mode as R1, R3-T6 according to the present technique.

This specific figure states that the number of unknowns for T (transmit routes) is 6 (i.e., = N), as well as the number of unknowns for R (receive routes). The number of measurements Q is 30, i.e. N* (N-1), since an element cannot simultaneously operate as a receiver and a transmitter. This is also the number of corresponding equations in the system. Each of the equations also comprises a medium or "mutual coupling" unknown Mij for a specific couple of elements, but the total number of such unknowns is just half of the number of equations (namely, Q/2), since Mij=Mji. Finally, the total number of unknowns is smaller than the number of equations in the system, so for N=6 (more accurately, for N≥5) the system A*Y = Q is overdetermined and thus has a solution.

In other words, the condition of an overdetermined system of equations for an antenna with N elements will be:

$$N*(N-1) \geq \{2*N + [N*(N-1)/2]\},$$

where N≥ 5.

In a general case, for the set of equations $A*Y = Q$, built for N elements:

$$Number\ of\ Unknowns = 2N + \frac{N*(N-1)}{2} = \frac{N*(N+3)}{2}$$

$$Rank(A) = \frac{N*(N+1)}{2} - 1$$

$$\frac{Number\ of\ Unknowns}{Rank(A)} \sim \frac{N*(N+3)}{N*(N+1)} \rightarrow 1,$$

for large N

A statistical method of Least Squares may be applied for solving the system of equations A*Y = Q. The sequence of steps may be the following:
Matrix A is generated, N as a parameter. Measurements at the antenna elements are performed to form the vector Q.

Once the vector $Q$ is built, initial vector $Y$ can be calculated.

For solving $A*Y=Q$, the MATLAB method "Least Squares" (*LSqr*) may be applied, which minimizes the difference $\|A*Y-Q\|$ by performing a statistical process.

$$Y=LSqr(A,Q)$$

$A*Y \neq Q \rightarrow$ thus a difference/an error is determined for the set of equations, which difference is actually expressed by the vector of corrections/adjustments YC.

Then adjustment of the elements' parameters is performed.

Then the difference (the YC vector) can iteratively be minimized by the Lsqr up to a predetermined value of error (which theoretically tends to zero when the number of iterations approaches infinity). The Lsqr method is more accurate and faster than other statistical methods, by of about 100. In practice, 7-9 iterations are enough for calibration of a regular PAA by the proposed method using the Least Squares method. However, other methods (mathematical, graphical, AI) may be used for solving the described set of equations built for N antenna elements of a PAA.

The various features and processes described above may be used independently from another or may be combined in various ways. All possible combinations and sub-combinations are intended to fall into the scope of the present disclosure. In addition, certain method or process blocks may be omitted in some implementations. The methods and processes described herein are also not limited to any sequence, and the blocks or states related thereto can be performed in other sequences that are appropriate. For example, described blocks of the flowchart may be performed in an order other than that specifically disclosed, or multiple blocks or states may be combined in a single block or state. The example blocks or states may be performed in serial, in parallel or in some other manner. Blocks or states may be added to or removed from the disclosed examples. Similarly, the example systems and components described herein may be configured differently than described; for example, elements may be added to, removed from, or rearranged compared to the disclosed examples.

**Claims**

1. A computer implemented method for self-calibration of a Phased Array Antenna (PAA) having an array of N antenna elements, each of them being configured to operate as a transmit antenna element and/or as a receive antenna element; the method being implemented by a processor and memory circuitry (PCM) and comprising:

   - building an overdetermined system of linear equations respectively presenting different couples of antenna elements, each of the equations expressing a difference between a value of a real parameter, determined for a specific couple, and a sum of unknowns including unknown calibrated parameters of the antenna elements forming the specific couple,
   - solving the system of equations for obtaining a solution in the form of values of corrections to be applied to corresponding antenna elements in the array, in order to reduce the difference in each of the equations by bringing internal parameters of the antenna elements in a specific couple closer to their respective unknown calibrated parameters,

   wherein each of said couples being formed from a transmit antenna element and a receive antenna element positioned at an arbitrary distance from one another in the PAA array.

2. The method according to Claim 1, wherein:

   - said value of the real parameter is a measurement taken at a receive element of a specific couple of antenna elements,
   - said sum of unknowns including an unknown calibrated receive parameter and an unknown calibrated transmit parameter of the respective receive and transmit antenna elements in said specific couple,
   - the correction values being respectively related to said unknowns in said equations,
   - the calibration is checked by comparing said difference with a predetermined error value $\varepsilon$.

3. The method according to any one of the preceding claims, wherein said real parameter is phasor, amplitude and/or phase.

4. The method according to any one of the preceding claims, wherein said overdetermined system of equations is presented as

$$A*Y = Q,$$

   where:

   Q is a measurements vector of said values of the real parameter for the couples,
   Y is a vector of unknowns, including said unknown calibrated parameters of the antenna elements of the couples,
   A is a binary matrix built for N elements,
   and wherein
   said solution of the system of equations is presented as a vector of said correction values.

5. The method according to any one of the preceding claims , comprising a preliminary step of determining said values of the real parameter for said couples, by performing measurements of said real parameter and/or by obtaining data on the measurements.

6. The method according to any one of the preceding claims, further comprising a step of adjusting internal parameters of the antenna elements using the respective correction values.

7. The method according to any one of the preceding claims, wherein said array of N elements comprises a plurality of antenna elements each configured to operate in a receiving mode as said receive element, and a group of antenna elements each configured to operate in a transmitting mode as said transmit element;
   the method comprising the following steps performed in cooperation with said PMC:

   - causing a specific element of said group of transmit elements to transmit a signal comprising a specific combination of frequency F, polarization AP and power P so as to expose said plurality of the receive elements to receiving the transmitted signal,

- selecting a set of different couples formed between different receive elements of the plurality and said specific transmit element,

- determining said real parameter at each of the selected couples, by measuring phasor at the receive element of the selected couple at said specific frequency and polarization;

- sequentially causing each of the remaining elements of said group to transmit a signal comprising the specific combination of frequency F specific polarization AP and power P so as to expose said plurality of the receive elements to receiving the transmitted signal, each time selecting a next set of different couples per a next specific transmit element and performing the measurements at the next set,

- building the overdetermined system of equations for said specific combination of frequency F, antenna polarization AP and power P, wherein:

said overdetermined system of equations comprises respective equations for all said selected couples of elements in the array;

each equation in the system is built for a specific selected couple of elements of the array when a first element of the couple is a transmit element and a second element of the couple is a receive element; each said equation expresses relation between:

◦ a value of the real parameter measured at the receive element of the couple, and between

◦ three unknown parameters respectively comprising calibrated real parameter value of the transmit element, calibrated real parameter value of the receive element and medium real parameter value expressing the transmit and receive elements' mutual coupling;

- applying a mathematical or an AI method for solving the system of equations, thereby

- obtaining the solution of the system of said equations, the solution comprising said values of corrections,

- adjusting the antenna elements by respectively using said values of corrections.

8. The method according to any one of the preceding claims , comprising a step of reducing complexity of the overdetermined system of equations by removing one or more equations from said system, while still maintaining the system to remain overdetermined,
wherein said step of removing is applied to one or more equations relating to at least one irregular antenna element selected from a non-exhaustive list comprising: a faulty element, a saturated element, an element with SNR lower than a predetermined minimum value.

9. The method according to any one of the preceding claims , wherein calibration of the transmit elements' parameters is performed separately from calibration of the receive elements' parameters, by solving different systems of equations and obtaining different solutions with suitable values of corrections.

10. A processor and memory circuitry (PMC) designed for calibrating a phased array antenna PAA having an array of N antenna elements, the array including a group capable of operating as transmit elements, and a plurality capable of operating as receive elements, said PMC comprising a computer with memory and an interface assembly, the PMC is configured to be operatively connected to and to establish data and control communication with said PAA for performing the following operations:

- building an overdetermined system of linear equations respectively presenting different couples of the antenna elements, wherein each of the equations expressing a difference between a value of a real parameter, determined for a specific couple, and a sum of unknowns including unknown calibrated parameters of the antenna elements forming the specific couple,

- solving the system of equations for obtaining a solution in the form of values of corrections to be applied to corresponding antenna elements in the array, for adjusting suitable internal parameters of the corresponding antenna elements in order to approach the respective unknown calibrated parameters thereof and to cause reduction of said difference,

wherein each of said couples being formed from a transmit antenna element and a receive antenna element positioned at an arbitrary distance from one another in the PAA array.

11. The PMC according to Claim 10, operative to enable adjusting the internal parameters of the antenna elements based on said values of corrections.

**12.** The PMC according to any one of Claims 10 to 11, wherein the interface assembly is configured to exchange data and control instructions with the PAA and to interact with a measuring unit and an adjustment unit, the PMC being further configured for performing the following functions in operative connection and said communication with the PAA:

a) by using the interface assembly, causing each of the transmit antenna elements, in turn, to transmit power towards the remaining antenna elements;

b) by using the measurement unit, performing said measurements of real parameters of the receive antenna elements and forwarding data on the measurements to the computer,

c) by using the adjustment unit, adjusting real parameters of the antenna elements by applying at least some of the corrections to said antenna elements, thereby bringing the internal parameters of the elements closer to the respective calibrated parameters;

d) repeating the calibration up to the difference between the value of real parameter and the sum of unknowns becomes equal or lower than a predetermined error value.

**13.** The method according to any one of Claims 1 to 9, using a Mutual Coupling Method (MCM) modified to build each of said equations for a specific couple of antenna elements spaced at an arbitrary distance from one another in the PAA array, wherein for two different couples comprising the same two antenna elements being transceivers, while performing transmission in two opposite directions, values of mutual coupling are considered equal.

**14.** A computer implemented algorithm comprising a computer-readable code to perform the steps of the method according to any one of Claims 1 to 9 and 13.

**15.** A non-transitory computer readable storage medium having embedded thereon the computer-readable code of Claim 14.

Fig. 1

## Fig. 2

PAA with N elements E — 10

Frequency F& Antenna Polarization AP & Transmit Power P & Receive Level

| Test unit 23.5 | Measurement unit 23.1 | Switching 23.4 | Adjustment unit 23.2 |
|---|---|---|---|

23

22 — Interface

Q

YC

24

Controller

26

28

Processor & Memory

33 — Original measurements

34 — Q vector

35 — Check unit

Building equations' system
$A * Y = Q$
where
$Y = [T, R, M]$

36

MCM modified — 30

Mathematical method $\alpha$ — 40

$i_2j$

A matrix — 32

38 — Solving the system to receive $Y = \alpha(A, Q)$ as $YC = [TC, RC, MC]$

$STD(YC) \leq \varepsilon$

"Stop"    Yes    No    YC (TC and/or RC)

42

EP 4 300 709 A1

$\overrightarrow{TC}$ and/or $\overrightarrow{RC}$ | Adjusting respective elements | Start at F & AP & P& RL

123.2

Element i of N (Ti) transmits —100

Test of N elements —123.5

Forming couples Ti Rj ...
j = [1...N] $j \neq i$
i = [1...N] —130

Excluding irregular elements from at least Rx routes —123A

i = i+1

123.4

Measuring Q:  phasor at Rj for each couple —123.1

Generating A —132

133

Previous original measurements

134

Forming vector $\overrightarrow{Q}$ for all couples

135

Correspond?   No

Excluding irregular elements from at least Rx routes

123B

Building system of equations $A * \overrightarrow{Y} = \overrightarrow{Q}$, where $\overrightarrow{Y} = [\overrightarrow{T}, \overrightarrow{R}, \overrightarrow{M}]$ unknown vector of calibrated values of Ti Rj Mij for couples TiRj —136

Solving the system to obtain $\overrightarrow{YC} = [\overrightarrow{TC}, \overrightarrow{RC}, \overrightarrow{MC}]$

138

LSqr —140

$\overrightarrow{TC}$ and/or $\overrightarrow{RC}$

No   STD(YC) ≤ ε —142

Yes

Stop

Fig. 3

## Fig. 4

$$T1+R2+M12=Q1 \quad \sim 51$$
$$T2+R1+M12=Q2 \quad \sim 52$$

$$\begin{bmatrix} 1 & 0 & 0 & 1 & 1 \\ 0 & 1 & 1 & 0 & 1 \end{bmatrix} * \begin{bmatrix} T1 \\ T2 \\ R1 \\ R2 \\ M12 \end{bmatrix} = \begin{bmatrix} Q1 \\ Q2 \end{bmatrix}$$

A(56)  $\vec{Q}$ (52,51)  $\vec{Y}$(54)

$$A * \vec{Y} = \vec{Q}$$

50

| E1 | | E2 |

Q1 | T1 | M12 | R2 | ~51

Q2 | R1 | M21 | T2 | ~52

M21=M12

## Fig. 5

Sizes:

| | | |
|---|---|---|
| Total number of measurements for $Q$ : | 30 | N*(N-1) |
| Number of unknowns for $T$: | 6 | (N) |
| Number of unknowns for $R$: | 6 | (N) |
| Number of unknowns for $T$ and $R$ : | 12 | (2*N) |
| Number of unknowns for $M$: | 15 | $\frac{N*(N-1)}{2}$ |
| Total number of unknowns ($T$, $R$, $M$): | 27 | $2N+(N*\frac{N-1}{2})$ |

| ↓i/j→ | 1 | 2 |
|---|---|---|
| 1 | 1 | 2 |
| 2 | 3 | 4 |
| 3 | 5 | 6 |

a) Antenna Map

| ↓i/j→ | 1 | 2 |
|---|---|---|
| 1 | T1 | T2 |
| 2 | T3 | T4 |
| 3 | T5 | T6 |

b) "T"

| ↓i/j→ | 1 | 2 |
|---|---|---|
| 1 | R1 | R2 |
| 2 | R3 | R4 |
| 3 | R5 | R6 |

c) "R"

EP 4 300 709 A1

Europäisches
Patentamt
European
Patent Office
Office européen
des brevets

# EUROPEAN SEARCH REPORT

**Application Number**

EP 23 18 1498

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | BEKERS DAVE ET AL: "Mutual-coupling based phased-array calibration: A robust and versatile approach", 2013 IEEE INTERNATIONAL SYMPOSIUM ON PHASED ARRAY SYSTEMS AND TECHNOLOGY, IEEE, 15 October 2013 (2013-10-15), pages 630-637, XP032562901, DOI: 10.1109/ARRAY.2013.6731903 [retrieved on 2014-02-04] | 1-7,9-15 | INV. H01Q3/26 G01S7/40 H04B17/309 |
| Y | * abstract * * page 630 – page 631 * ----- | 8 | |
| X | LEBRON RODRIGO M ET AL: "Validation and Testing of Initial and In-Situ Mutual Coupling-Based Calibration of a Dual-Polarized Active Phased Array Antenna", IEEE ACCESS, IEEE, USA, vol. 8, 26 March 2020 (2020-03-26), pages 78315-78329, XP011787584, DOI: 10.1109/ACCESS.2020.2983523 [retrieved on 2020-05-07] | 1-7,9-15 | |
| A | * abstract * * page 78317 – page 78319 * ----- | 8 | TECHNICAL FIELDS SEARCHED (IPC) H01Q H04B G01S |
| X | US 2020/266535 A1 (RAFIQUE RAIHAN [SE] ET AL) 20 August 2020 (2020-08-20) | 1-7,9-15 | |
| A | * abstract; figures 3-7B * * paragraph [0055] – paragraph [0121] * ----- | 8 | |
| X | US 2017/324161 A1 (KAREISTO JUKKA [FI] ET AL) 9 November 2017 (2017-11-09) | 1,10,11, 14,15 | |
| A | * abstract; figures 4,5 * * paragraph [0029] – paragraph [0030] * ----- | 2-9,12, 13 | |
| | -/-- | | |

The present search report has been drawn up for all claims

| Place of search | Date of completion of the search | Examiner |
|---|---|---|
| The Hague | 9 November 2023 | Vial, Antoine |

EPO FORM 1503 03.82 (P04C01)

Europäisches
Patentamt

European
Patent Office

Office européen
des brevets

## EUROPEAN SEARCH REPORT

**Application Number**

EP 23 18 1498

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | NEIDMAN Y ET AL: "Diagnostic of phased arrays with fault elements using the mutual coupling method", MICROWAVES, COMMUNICATIONS, ANTENNAS AND ELECTRONIC SYSTEMS, 2008. COMCAS 2008. IEEE INTERNATIONAL CONFERENCE ON, IEEE, PISCATAWAY, NJ, USA, 13 May 2008 (2008-05-13), pages 1-6, XP031285363, ISBN: 978-1-4244-2097-1 | 8 | |
| A | * abstract * | 1-7,9-15 | |

|  | | | TECHNICAL FIELDS SEARCHED (IPC) |
|---|---|---|---|

The present search report has been drawn up for all claims

| Place of search | Date of completion of the search | Examiner |
|---|---|---|
| The Hague | 9 November 2023 | Vial, Antoine |

EPO FORM 1503 03.82 (P04C01)

**page 2 of 2**

## ANNEX TO THE EUROPEAN SEARCH REPORT
## ON EUROPEAN PATENT APPLICATION NO.

EP 23 18 1498

This annex lists the patent family members relating to the patent documents cited in the above-mentioned European search report.
The members are as contained in the European Patent Office EDP file on
The European Patent Office is in no way liable for these particulars which are merely given for the purpose of information.

09-11-2023

| Patent document cited in search report | | Publication date | Patent family member(s) | | Publication date |
|---|---|---|---|---|---|
| US 2020266535 | A1 | 20-08-2020 | EP | 3596780 A1 | 22-01-2020 |
| | | | PL | 3596780 T3 | 31-01-2022 |
| | | | US | 2020266535 A1 | 20-08-2020 |
| | | | US | 2022094052 A1 | 24-03-2022 |
| | | | WO | 2018166575 A1 | 20-09-2018 |
| US 2017324161 | A1 | 09-11-2017 | EP | 2987202 A1 | 24-02-2016 |
| | | | US | 2017324161 A1 | 09-11-2017 |
| | | | WO | 2014169934 A1 | 23-10-2014 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **Y. NEIDMAN ; R. SHAVIT ; A. BRONSHTEIN.** Diganostc of phased arrays with faulty elements using the mutual coupling method. *IET Microw. Antennas Propag.,* 2009, vol. 3 (2), 235-241
- **ILGIN SEKER.** Calibration methods for phased array radars. *Proc. Of SPIE,* 2013, vol. 87140W-1
- **ANDRZEJ CICHOCKI ; ROLF UNBEHAUEN.** Neural Networks for Solving Systems of Linear Equations and Related Problems. *IEEE Transactions on Circuits and Systems - 1: Fundamental Theory and Applications,* February 1992, vol. 39 (2